# EUROPÄISCHE PATENTSCHRIFT

(11) **EP 1 586 469 B1**
(45) Veröffentlichungstag und Bekanntmachung des Hinweises auf die Patenterteilung: **12.12.2007**
(21) Anmeldenummer: 04023428.8
(22) Anmeldetag: 01.10.2004
(51) Int. Cl.: B60D 1/06, B60D 1/28

(54) **Anhängerkupplung für ein Fahrzeug**
Trailer hitch for a vehicle
Attelage de remorque pour un véhicule

(30) Priorität: 16.04.2004 DE 202004006228 U
(43) Veröffentlichungstag der Anmeldung: 19.10.2005
(73) Patentinhaber: Sauermann, Hans, D-86558 Freinhausen (DE)
(72) Erfinder: Sauermann, Hans, D-86558 Freinhausen (DE)
(74) Vertreter: Witzany, Manfred

(56) Entgegenhaltungen:
- EP-A- 0 968 852
- EP-A- 1 382 467
- WO-A-20/04071792
- DE-C1- 3 824 028
- US-A- 2 397 558
- US-A- 4 958 848
- US-A- 5 713 691
- US-B1- 6 390 314

## Beschreibung

Die Erfindung betrifft eine Anhängerkupplung für ein Fahrzeug, insbesondere einen Ackerschlepper.

Aus der EP-A-0968852 ist eine Anhängerkupplung bekannt, die einen Kupplungshaken aufweist, der in eine Kupplungsöse eindringen kann. Dieser Kupplungshaken ist dabei auf einem Träger gehalten, der verschwenkbar am Fahrzeug abgestützt ist. Der Träger weist außerdem eine Nocke auf, die von der Kuppelöse betätigbar ist. Beim Eindringen einer Kuppelöse in das Kupplungsmaul wird dabei der Träger verschwenkt und der Haken in die Kuppelöse eingetaucht. Zusätzlich weist diese bekannte Kupplung einen fahrzeugfesten Kugelkopf auf.

Aus der WO 2004/071792 A ist eine gattungsgemäße Anhängerkupplung bekannt, die einen verschwenkbar gehaltenen Kugelkopf aufweist. Dieser Kugelkopf ist zur Verbindung mit einer Kugelkalotte vorgesehen. Beim Eindringen der Kugelkalotte in das Kupplungsmaul wird diese von einem fahrzeugfesten Fangmaul zentriert, bis die Kugelkalotte die vorgesehene Endstellung erreicht hat. Diese Endstellung wird von einem Sensor erfaßt, der anschließend den Kugelkopf in die Kuppelstellung verschwenkt, in der er in die Kugelkalotte eintaucht.

Eine weitere ähnlich Anhängenkopplung ist aus der EP 1 382 467 bekannt.

Der Erfindung liegt die Aufgabe zugrunde, eine Anhängerkupplung der eingangs genannten Art zu schaffen, die sich durch einen einfachen Aufbau und ein einfaches Ankuppeln des Anhängers auszeichnet.

Diese Aufgabe wird erfindungsgemäß mit den Merkmalen des Patentanspruchs 1 gelöst.

Bei der Anhängerkupplung gemäß Anspruch 1 ist das Kupplungsglied an einem verstellbaren Träger festgelegt, der vorzugsweise in einem Gehäuse verstellbar abgestützt ist. Dieser verstellbare Träger ist mit einer Nocke fest verbunden, so daß die Nocke, der Träger und das Kupplungsglied eine feste Einheit bilden. Alle drei Teilen können damit nur zusammen verstellt werden. Die Nocke wird von einer Deichsel beim Einführen in das Kupplungsmaul betätigt, so daß der Träger und somit auch das Kupplungsglied verstellt werden. Auf diese Weise wird das Kupplungsglied von der Deichsel in die Kuppelstellung überführt. Damit ist diese Anhängerkupplung in der Lage, einen Anhänger beim Einführen der Deichsel in das Kupplungsmaul selbsttätig anzukuppeln, wobei der Verstellmechanismus für das Kupplungsglied überraschend einfach ist. Es sind damit nur wenige Bauteile zum Aufbau der Kupplung erforderlich, von denen nur eines beweglich ist. Außerdem kann als Kupplungsglied sehr einfach ein Kugelkopf eingesetzt werden, ohne die Funktionstätigkeit des Ankupplungsmechanismus zu beeinträchtigen. Alternativ kann als Kupplungsglied auch ein Hitchhaken zum Erfassen einer Zugöse oder ein Piton eingesetzt werden. Beim Wechsel des Kupplungsglieds wird vorzugsweise der gesamte Träger ausgewechselt. Zur Erzielung eines erhöhten Fahrkomforts ist das Kupplungsglied von einem Kugelkopf gebildet. Dieser Kugelkopf ist an einem verstellbaren Träger festgelegt, um ein selbsttätiges Ankuppeln des Kugelkopfs beim Einführen der Deichsel zu gewährleisten.

Gemäß Anspruch 2 ist es günstig, wenn der Träger verschwenkbar vorzugsweise in einem Gehäuse abgestützt ist. Der Träger weist hierzu eine Achse auf, die in entsprechenden Lagern im Gehäuse verdrehbar gelagert ist. Diese Maßnahme führt zu einem sehr einfachen Aufbau der Anhängerkupplung.

Zur Erzielung einer günstigen Kraftumsetzung ist es günstig, wenn sich die Nocke im wesentlichen horizontal bewegt, zumal auch die Deichsel beim Ankuppelvorgang horizontal bewegt wird. Das Kupplungsglied sollte sich dagegen im wesentlichen vertikal bewegen, um eine effektive Ankopplung an die Deichsel zu erzielen. Diese beiden Bedingungen werden am einfachsten gemäß Anspruch 3 dadurch realisiert, daß der Träger um eine horizontale Achse verschwenkbar ist.

Zur weiteren Vereinfachung des Ankupplungsvorgangs ist es gemäß Anspruch 4 vorteilhaft, wenn der Träger federnd entgegen der Kupplungsstellung vorgespannt ist. Damit befindet sich das Kupplungsglied zu Beginn des Ankupplungsvorgangs in einer das Kupplungsmaul freigebenden Lösestellung und wird erst durch die einführende Deichsel in die Kuppelstellung verstellt. Die Feder kann als Druck- bzw. Zugfeder oder als Drehfeder ausgebildet sein. Außerdem ist es vorstellbar, Kombinationen der genannten Federarten einzusetzen.

Zur Erzielung einer sicheren Verbindung des Kupplungsglieds mit der Deichsel während der Fahrt ist es gemäß Anspruch 5 günstig, wenn der Träger mit einem verstellbaren Sicherungsstift zusammenwirkt. Dieser Sicherungsstift arretiert den Träger in einer Verriegelungsstellung, so daß ein ungewolltes Verstellen des Trägers in die Lösestellung verhindert wird.

Dringt der Sicherungsstift gemäß Anspruch 6 im wesentlichen von oben in eine Vertiefung des Trägers ein, so ergibt sich ein besonders platzsparender Aufbau der Anhängerkupplung. Vorzugsweise dringt der Sicherungsstift in etwa über der Schwenkachse des Trägers in die Vertiefung ein, so daß der Träger im Bereich des Sicherungsstiftes im wesentlichen senkrecht zur Verstellrichtung des Sicherungsstiftes bewegt wird. Auf diese Weise wird verhindert, daß der Sicherungsstift durch Kraftwirkung des Trägers unbeabsichtigt in eine entsicherte Stellung verschoben wird.

Zum selbsttätigen Ausgleich eines Kupplungsspiels ist es gemäß Anspruch 7 vorteilhaft, wenn der Sicherungsstift bzw. die Anlagefläche des Trägers im spitzen Winkel zur Verschiebungsrichtung des Sicherungsstiftes angestellt ist. Der Sicherungsstift bzw. die Anlageflächen bilden Keilflächen, über die eine feinfühlige Nachstellung des Trägers und damit des Kupplungsglieds erfolgen kann. Dies ist insbesondere wichtig, um Verschleißerscheinungen am Kupplungsglied oder am Gegenstück entgegenzuwirken. Vorzugsweise ist der Anstellwinkel dieser Keilflächen so klein gewählt, daß die Kraftübertragung vom Sicherungsstift auf den Träger selbsthemmend ist. Dies gewährleistet, daß der Träger während der Fahrt den Sicherungsstift nicht herausdrücken kann, so daß die Arretierung des Trägers aufgehoben werden könnte.

Um sicherzustellen, daß der Sicherungsstift selbsttätig in die Verriegelungsstellung überführt wird, ist es gemäß Anspruch 8 vorteilhaft, wenn dieser federnd in Richtung der Verriegelungsstellung vorgespannt ist.

Alternativ oder zusätzlich zu den Merkmalen des Anspruchs 6 ist es gemäß Anspruch 9 günstig, wenn das Kupplungsspiel mittels einer Stellschraube einstellbar ist. Diese Stellschraube ist vorzugsweise im Gehäuse oder Fangmaul vorgesehen und gegen die Deichsel verstellbar.

Gemäß Anspruch 10 ist es günstig, wenn am Träger bzw. am fahrzeugfesten Gehäuse ein Fangmaul abgestützt ist. Dieses Fangmaul sorgt für ein sicheres Einfangen der Deichsel und erleichtert damit den Ankupplungsvorgang.

Um eine möglichst große Schwenkfreiheit der Kupplungsverbindung bei Kurvenfahrten und beim Rangieren zu gewährleisten, ist es gemäß Anspruch 11 günstig, wenn das Fangmaul um eine in etwa vertikale Achse verschwenkbar gehalten ist. Damit wird verhindert, daß die Anhängerdeichsel insbesondere beim Rangieren gegen das Fangmaul stößt und auf diese Weise die Bewegungsfreiheit der Kupplungsverbindung einschränkt.

Um trotz der verschwenkbaren Lagerung des Fangmauls ein zielsicheres Einfangen der Anhängerdeichsel zu gewährleisten, ist es gemäß Anspruch 12 vorteilhaft, wenn am Fangmaul und am Träger zusammenwirkende Führungsflächen vorgesehen sind. Diese Führungsflächen sind vorzugsweise als Keilflächen ausgebildet und zwingen das Fangmaul beim Überführen des Trägers in die Lösestellung in eine Neutrallage. In dieser Neutrallage ist das Fangmaul vorzugsweise symmetrisch zum Fahrzeug ausgerichtet. Da das Fangmaul in dieser Lage des Trägers nicht mehr verschwenkbar ist, kann es die Anhängerdeichsel optimal zum Kupplungsglied führen. Erst nach erfolgter Überführung des Trägers in die Kuppelstellung wird die Verschwenkbarkeit des Fangmauls freigegeben, um wieder eine ausreichende Verschwenkbarkeit der Anhängerdeichsel gegenüber dem Zugfahrzeug zu ermöglichen. In dieser Stellung wird jedoch das Fangmaul zum Einfangen der Anhängerdeichsel nicht mehr benötigt.

Der Erfindungsgegenstand wird beispielhaft anhand der Zeichnung erläutert, ohne den Schutzumfang zu beschränken.

Es zeigt:
- Figur 1: eine geschnittene Darstellung einer Anhängerkupplung in der Lösestellung,
- Figur 2: die Anhängerkupplung gemäß Figur 1 in der Kuppelstellung,
- Figur 3: eine Schnittdarstellung durch eine zweite Ausführungsform einer Anhängerkupplung und
- Figur 4: eine räumliche Darstellung der Anhängerkupplung gemäß Figur 3.

Eine Anhängerkupplung 1 weist ein fahrzeugfestes Gehäuse 2 auf. Grundsätzlich ist auch daran gedacht, das Gehäuse 2 höhenverstellbar am Zugfahrzeug abzustützen, um eine bessere Anpassung an einen Anhänger zu ermöglichen. Die Verbindung des Gehäuses 2 mit dem Fahrzeug bzw. einer Höhenverstellvorrichtung erfolgt bevorzugt über einen Schaft oder Schrauben, welche in den Figuren zur Vereinfachung weggelassen werden. Am Gehäuse 2 ist ein Fangmaul 3 angeformt, welches eine Deichsel 4 führt.

Die Deichsel 4 weist eine Kugelkalotte 5 auf, die mit einem im Gehäuse 2 angeordneten Kugelkopf 6 zusammenwirkt. Dieser Kugelkopf 6 bildet das Kupplungsglied 6 der Anhängerkupplung 1. Der Kugelkopf 6 ist auf einem Träger 7 festgelegt, der um eine Achse 8 verschwenkbar im Gehäuse 2 abgestützt ist. Am Träger 7 ist außerdem eine Nocke 9 vorgesehen, die von der eindringenden Kugelkalotte 5 unter Mitnahme des Trägers 7 verstellt wird. Auf diese Weise wird erreicht, daß die horizontale Bewegung der Kugelkalotte 5 beim Einführen der Deichsel 4 in das Kupplungsmaul 10 in eine im wesentlichen vertikale Bewegung des Kupplungskopfes 6 umgesetzt wird. Dabei gleitet die Nocke 9 entlang der Außenfläche der Kugelkalotte 5, um die erforderlichen Verstellwege für das Kupplungsglied 6 einzustellen. Der Kupplungsvorgang erfordert damit neben dem Einführen der Deichsel 4 in das Kupplungsmaul 10 keine weiteren Maßnahmen und geschieht im wesentlichen selbsttätig.

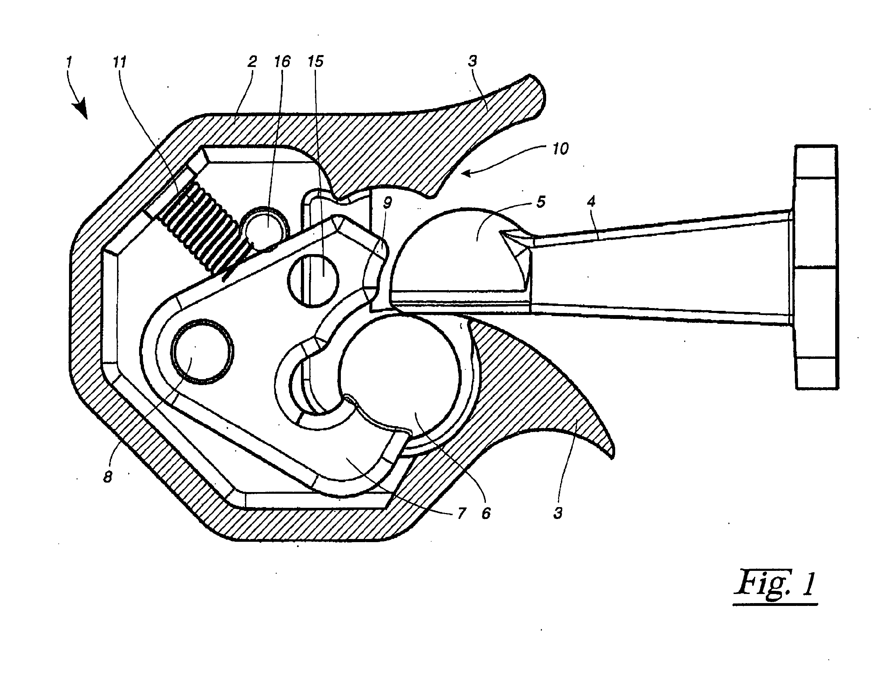

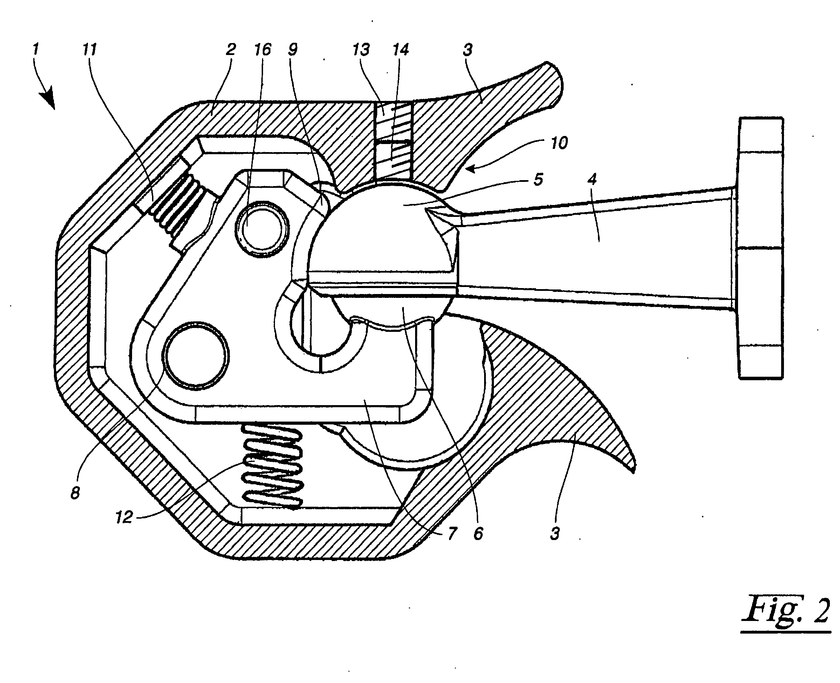

Um das Kupplungsglied 6 in der in Figur 1 dargestellten Lösestellung zu halten, ist der Träger 7 mittels einer Druckfeder 11 in die Lösestellung vorgespannt. Alternativ oder zusätzlich kann auch eine in Figur 2 angedeutete Zugfeder eingesetzt werden. Darüber hinaus ist auch daran gedacht, im Bereich der Achse 8 eine nicht dargestellte Drehfeder einzusetzen, um den Träger 7 vorzuspannen. Die genannten Federn können einfach oder mehrfach und auch untereinander kombiniert eingesetzt werden, um einen möglichst kompakten Aufbau der Anhängerkupplung 1 bei hoher Funktionssicherheit zu erzielen.

Im Gehäuse 2 gemäß Figur 2 ist oberseitig eine Gewindebohrung 13 vorgesehen, in der eine Stellschraube 14 eingedreht ist. Diese Stellschraube 14 dient zur manuellen Einstellung eines Spiels zwischen dem Kugelkopf 6 und der Kugelkalotte 5.

Um das Kupplungsglied 6 in der in Figur 2 dargestellten Kuppelstellung zu arretieren, weist der Träger 7 eine Bohrung 15 auf, in die ein Sicherungsstift 16 eindringen kann. Dieser Sicherungsstift 16 ist in der in Figur 2 dargestellten Kuppelstellung fluchtend zur Bohrung 15 ausgerichtet. Der Sicherungsstift 16 ist außerdem axial verschiebbar und federnd gegen den Träger 7 vorgespannt, so daß er in der Kuppelstellung in die Bohrung 15 eindringt und den Träger 7 arretiert. Damit ist ein unbeabsichtigtes Lösen des Kupplungsglieds 16 ausgeschlossen.

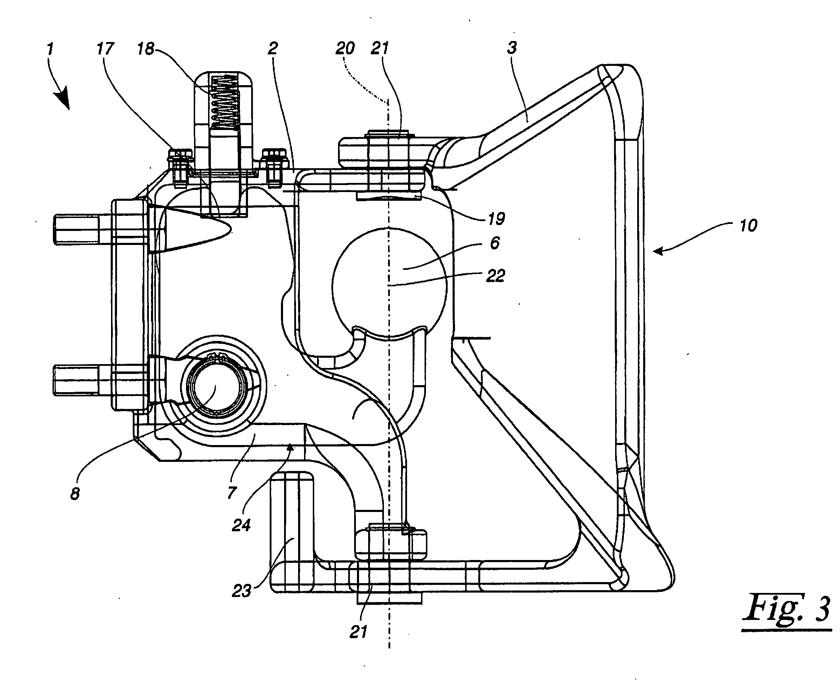

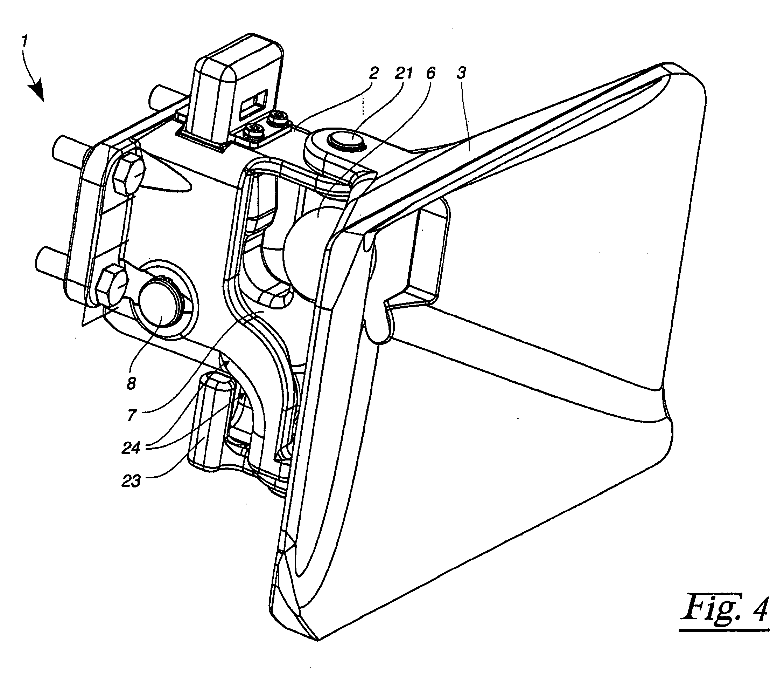

Eine alternative Ausführungsform der Anhängerkupplung 1 wird anhand der beiden Figuren 3 und 4 näher erläutert, wobei gleiche Bezugszeichen gleiche Teile benennen. Die folgende Beschreibung beschränkt sich auf die Unterschiede zur vorbeschriebenen Ausführungsform.

Der Träger 7 weist eine Vertiefung 17 im oberen Bereich auf, in die der Sicherungsstift 16 von oben eingreift. Der Sicherungsstift 16 ist vertikal verschiebbar und durch eine Feder 18 gegen den Träger 7 vorgespannt. Auf diese Weise ergibt sich ein besonders kompakter Aufbau der Anhängerkupplung 1. Zum Ausschalten des vertikalen Spiels der Deichsel 4 ist im Gehäuse 2 ein Puffer 19 vorgesehen, der von oben gegen die Kalotte 5 drückt. Dieser Puffer 19 besteht aus einem Gummi mit hoher Shorehärte, so daß dieser einen dauerhaften Druck auf die Kalotte 5 ausüben kann.

Das Fangmaul 3 ist um eine vertikale Achse 20 verschwenkbar gehalten, um eine ausreichende Verschwenkbarkeit der Anhängerdeichsel 4 zu gewährleisten. Zu diesem Zweck ist das Fangmaul 3 an Drehgelenken 21 am Gehäuse 2 abgestützt. Die Schwenkachse 20 des Fangmauls 3 geht dabei durch den Kugelmittelpunkt 22, wenn sich dieser in der Kuppelstellung befindet. Auf diese Weise ist eine optimale Ausrichtung des Fangmauls 3 beim Rangieren des Fahrzeugs gewährleistet.

Am Fangmaul 3 sind zugfahrzeugseitig zur Schwenkachse 20 nach oben gerichtete Stege 23 vorgesehen, die mit dem Träger 7 zusammenwirken. Die Stege 23 und der Träger 7 weisen miteinander korrespondierende Führungsflächen 24 auf, die beim Verschwenken des Trägers 7 in die Lösestellung das Kupplungsmaul 3 in die dargestellte Neutrallage zwingen.

### Bezugszeichenliste

- 1: Anhängerkupplung
- 2: Gehäuse
- 3: Fangmaul
- 4: Deichsel
- 5: Kugelkalotte
- 6: Kugelkopf
- 7: Träger
- 8: Achse
- 9: Nocke
- 10: Kupplungsmaul
- 11: Druckfeder
- 12: Zugfeder
- 13: Gewindebohrung
- 14: Sternschraube
- 15: Bohrung
- 16: Sicherungsstift
- 17: Vertiefung
- 18: Feder
- 19: Puffer
- 20: Achse
- 21: Drehgelenk
- 22: Kugelmittelpunkt
- 23: Steg
- 24: Führungsfläche

## Patentansprüche

1. Anhängerkupplung für ein Fahrzeug, insbesondere einen Ackerschlepper, wobei die Anhängerkupplung (1) einen Kugelkopf (6) aufweist, welcher eine Kugelkalotte (5) einer Deichsel (4) eines Anhängers erfassen kann und der Kugelkopf (6) an einem zwischen einer Kuppelstellung einer Lösestellung verstellbaren Träger (7) festgelegt ist, **dadurch gekennzeichnet, daß** der Träger (7) mit einer Nocke (9) fest verbunden ist, welche von der eindringenden Kugelkalotte(5) unter Mitnahme des Trägers (7) verstellbar ist, um das Kupplungsglied (6) in die Kuppelstellung zu verstellen.

2. Anhängerkupplung nach Anspruch 1, **dadurch gekennzeichnet, daß** der Träger (7) verschwenkbar abgestützt ist.

3. Anhängerkupplung nach Anspruch 2, **dadurch gekennzeichnet, daß** der Träger (7) um eine in etwa horizontale Achse (8) verschwenkbar ist.

4. Anhängerkupplung nach mindestens einem der Ansprüche 1 bis 3, **dadurch gekennzeichnet, daß** der Träger (7) federnd entgegen der Kuppelstellung vorgespannt ist.

5. Anhängerkupplung nach mindestens einem der Ansprüche 1 bis 4, **dadurch gekennzeichnet, daß** der Träger (7) mit einem verstellbaren Sicherungsstift (16) zusammenwirkt, der den Träger (7) in der Kuppelstellung arretiert.

6. Anhängerkupplung nach Anspruch 5, **dadurch gekennzeichnet, daß** der Sicherungsstift (16) im wesentlichen von oben in eine Vertiefung (17) des Trägers (7) eingreift.

7. Anhängerkupplung nach Anspruch 5 oder 6, **dadurch gekennzeichnet, daß** der Sicherungsstift (16) und/oder mindestens eine diesen erfassende Anlagefläche (15) des Trägers (7) im spitzen Winkel zur Verschiebungsrichtung des Sicherungsstiftes (16) angestellt ist.

8. Anhängerkupplung nach mindestens einem der Ansprüche 5 bis 7, **dadurch gekennzeichnet, daß** der Sicherungsstift (16) in Richtung der arretierenden Verriegelungsstellung federnd vorgespannt ist.

9. Anhängerkupplung nach mindestens einem der Ansprüche 1 bis 8, **dadurch gekennzeichnet, daß** zur Reduktion eines Kupplungsspiels eine Stellschraube (14) und/oder ein elastischer Puffer (19) gegen die Deichsel (4) drückbar ist.

10. Anhängerkupplung nach mindestens einem der Ansprüche 1 bis 9, **dadurch gekennzeichnet, daß** am Träger (7) und/oder an einem fahrzeugfesten Gehäuse (2) ein Fangmaul (3) abgestützt ist.

11. Anhängerkupplung nach Anspruch 10, **dadurch gekennzeichnet, daß** das Fangmaul (3) um eine in etwa vertikale Achse (20) verschwenkbar gehalten ist.

12. Anhängerkupplung nach Anspruch 11, **dadurch gekennzeichnet, daß** am Fangmaul (3) Führungsflächen (24) vorgesehen sind, die mit entsprechenden Führungsflächen (24) des Trägers (7) zusammenwirken und beim Verstellen des Trägers (7) in die Lösestellung das Fangmaul (3) in eine Neutrallage zwingen.

## Claims

1. Trailer coupling for a vehicle, in particular a tractor, the trailer coupling (1) having a ball head (6) which can grasp a universal ball joint (5) of a drawbar (4) of a trailer and the ball head (6) being fixed on a support (7) which is displaceable between a coupling position and a release position, **characterized in that** the support (7) is connected fixedly to a cam (9) which is displaceable by the penetrating universal ball joint (5), with the support (7) being carried along, in order to displace the coupling element (6) into the coupling position.

2. Trailer coupling according to Claim 1, **characterized in that** the support (7) is supported pivotably.

3. Trailer coupling according to Claim 2, **characterized in that** the support (7) can be pivoted about an approximately horizontal axis (8).

4. Trailer coupling according to at least one of Claims 1 to 3, **characterized in that** the support (7) is prestressed resiliently counter to the coupling position.

5. Trailer coupling according to at least one of Claims 1 to 4, **characterized in that** the support (7) interacts with a displaceable securing pin (16) which retains the support (7) in the coupling position.

6. Trailer coupling according to Claim 5, **characterized in that** the securing pin (16) engages in a depression (17) of the support (7) essentially from above.

7. Trailer coupling according to Claim 5 or 6, **characterized in that** the securing pin (16) and/or at least one bearing surface (15) of the support (7), which bearing surface grasps the securing pin, is positioned at an acute angle with respect to the direction of displacement of the securing pin (16).

8. Trailer coupling according to at least one of Claims 5 to 7, **characterized in that** the securing pin (16) is prestressed resiliently in the direction of the retaining locking position.

9. Trailer coupling according to at least one of Claims 1 to 8, **characterized in that**, in order to reduce a coupling play, an adjusting screw (14) and/or an elastic buffer (19) can be pressed against the drawbar (4).

10. Trailer coupling according to at least one of Claims 1 to 9, **characterized in that** an intercepting mouth (3) is supported on the support (7) and/or on a housing (2) fixed on the vehicle.

11. Trailer coupling according to Claim 10, **characterized in that** the intercepting mouth (3) is held pivotably about an approximately vertical axis (20).

12. Trailer coupling according to Claim 11, **characterized in that** guide surfaces (24) are provided on the intercepting mouth (3), said guide surfaces interacting with corresponding guide surfaces (24) of the support (7) and, during the displacement of the support (7) into the release position, forcing the intercepting mouth (3) into a neutral position.

## Revendications

1. Attelage de remorque pour un véhicule, notamment un tracteur agricole, dans lequel l'attelage de remorque (1) présente une tête sphérique (6) qui peut saisir une calotte sphérique (5) d'un timon (4) d'une remorque et dans lequel la tête sphérique (6) est fixée à un support (7) réglable entre une position d'attelage et une position de libération, **caractérisé en ce que** le support (7) est connecté fixement à une came (9) qui peut être déplacée par la calotte sphérique (5) entrante en entraînant le support (7), afin de déplacer l'organe d'attelage (6) dans la position d'attelage.

2. Attelage de remorque selon la revendication 1, **caractérisé en ce que** le support (7) est supporté de manière déplaçable.

3. Attelage de remorque selon la revendication 2, **caractérisé en ce que** le support (7) peut pivoter autour d'un axe (8) approximativement horizontal.

4. Attelage de remorque selon au moins l'une quelconque des revendications 1 à 3, **caractérisé en ce que** le support (7) est précontraint élastiquement à l'encontre de la position d'attelage.

5. Attelage de remorque selon au moins l'une quelconque des revendications 1 à 4, **caractérisé en ce que** le support (7) coopère avec une broche de fixation (16) déplaçable qui bloque le support (7) dans la position d'attelage.

6. Attelage de remorque selon la revendication 5, **caractérisé en ce que** la broche de fixation (16) s'engage essentiellement par le haut dans un renfoncement (17) du support (7).

7. Attelage de remorque selon la revendication 5 ou 6, **caractérisé en ce que** la broche de fixation (16) et/ou au moins une surface d'appui (15) la saisissant du support (7) sont inclinées suivant un angle aigu par rapport à la direction de déplacement de la broche de fixation (16).

8. Attelage de remorque selon au moins l'une quelconque des revendications 5 à 7, **caractérisé en ce que** la broche de fixation (16) est précontrainte élastiquement dans la direction de la position de verrouillage bloquante.

9. Attelage de remorque selon au moins l'une quelconque des revendications 1 à 8, **caractérisé en ce que** pour la réduction d'un jeu d'attelage, on peut presser une vis de réglage (14) et/ou un tampon élastique (19) contre le timon (4).

10. Attelage de remorque selon au moins l'une quelconque des revendications 1 à 9, **caractérisé en ce qu'**une mâchoire d'accrochage (3) est supportée sur le support (7) et/ou sur un boîtier (2) fixé au véhicule.

11. Attelage de remorque selon la revendication 10, **caractérisé en ce que** la mâchoire d'accrochage (3) est maintenue de manière à pouvoir pivoter autour d'un axe (20) approximativement vertical.

12. Attelage de remorque selon la revendication 11, **caractérisé en ce que** l'on prévoit sur la mâchoire d'accrochage (3) des surfaces de guidage (24) qui coopèrent avec des surfaces de guidage correspondantes (24) du support (7) et qui forcent la mâchoire d'accrochage (3) dans une position neutre lors du déplacement du support (7) dans la position de libération.
